# EUROPEAN PATENT APPLICATION

(11) **EP 1 505 709 A2**
(43) Date of publication of application: **09.02.2005**
(21) Application number: 04447172.0
(22) Date of filing: 12.07.2004
(51) Int. Cl.: H02J 7/14

(54) **Fully automatic autonomous and portable charging device for traction batteries**

(30) Priority: 25.07.2003 BE 200300422
(71) Applicant: Stuer-Egghe bvba, 9100 Nieuwkerken-Waas (BE)
(72) Inventor: The designation of the inventor has not yet been filed

(57) **Abstract**

A fully automatic autonomous and portable charging device for traction batteries characterised in this way that, using a combustion engine for providing the power for an electrical machine delivering the required charging current whereby the starting and stopping of said engine can be operated automatically, the signal for stopping the engine is issued by measurements of working parameters, said measurements combined and transformed by a free programmable predetermined logic, and by the charging current delivered to the said battery.

## Description

### TECHNICAL FIELD AND BACKGROUND OF THE INVENTION

Present invention finds its application in these circumstances where outfits, such as apparatus, motors, arrangements, tools which are mainly put to industrial use on various locations and therefore being mostly portable, must be provided with electrical power and source this power from traction batteries.

The portability of the outfit is not a requirement, but must be understood in this manner that no fixed electrical power source being available, the power must be drawn from traction batteries. The pertaining batteries are of the 12V or 24V type and are commonly used in automobile surroundings.

As above-said batteries will discharge on delivering power to said outfits, they must be recharged in order to ascertain their usefulness. The recharging is performed by a charging device linked to an energy source such as an electricity distribution network or an electrical machine coupled with a power source to recharge the battery following a predetermined charging pattern called charging characteristic, which is adapted to a number of ambient parameters such as the state of charge of the battery, the temperature, the utilisation circumstances and so on.

The non-respect of the charging characteristic has a negative effect on the lifetime of the battery.

It is normal that an automated charging cycle will be engaged to obtain a proper charging and to prolong the lifetime of the battery. Most devices on the market comply with this, on condition that a fixed electricity distribution source be available. These devices can be set to different characteristics depending on the use and the type of the battery.

If on the contrary no electricity distribution source is available to provide the primary energy source, most often an autonomous unit is engaged, for example a generator set consisting of a combustion engine coupled with an electricity generator.

In practice however the charging device, either in separate mobile execution or integrated with the power consuming outfit, has its advantages crippled by the use on the terrain. Very often the working conditions entail an inadequate way of charging the batteries: sometimes the charging cycle is shortened and intensified in order to gain time, sometimes the charging cycle is extended because nobody is around to switch it off , which in time leads to definite damage to the battery.

Specific for the use of an automated charging device is the difficulty to start and stop the device at the right moment. Most battery chargers base the starting moment on a measurement of the remaining voltage in the battery. The charging cycle is then engaged and subsequently completed, mainly on a time basis. Practice however shows that this is detrimental to the battery in the long run. In addition, energy is meanwhile consumed in an uneconomical way.

The present invention avoids this by measuring the current delivered to the battery and using this measurement related to the appropriate phase of the charging characteristic to stop the charging. This means the stopping of the engine does not depend on the battery being fully charged or not, but depends on the charging current, whereby in addition eventual momentarily user-induced varying loads on the battery are taken in account.

The present invention introduces a tool to configure the functioning of an autonomous charging device equipped with a combustion engine in such a way that by adding an adapted control to a customary charging process an optimal charging cycle can be reached under the ruling working conditions, resulting in the achievement of not only technical but also economical benefits by avoiding injudicious and detrimental interventions.

### DESCRIPTION OF THE INVENTION

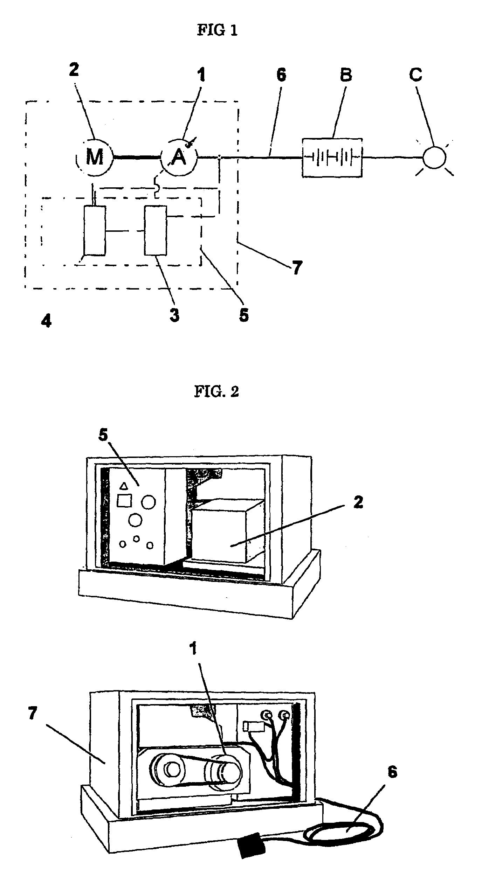

The functioning of the present invention can be explained with the help of the diagram in fig.1.

The battery (ref. B) which provides the current for the work load (ref. C) is electrically connected (ref. 6) with an electrical machine (ref. 1) which delivers the charging current and in turn is linked to a combustion engine (ref. 2) for the supply of the required power.

The electrical machine (ref. 1) is controlled by a measuring and control unit (ref. 3) in the sense that following the measuring signals coming from the electrical circuit, the electrical machine (ref. 1) delivers a charging current with attuned intensity, voltage and duration, according to the predetermined charging characteristic. The combustion engine (ref. 2) is controlled by a second control unit (ref. 4) in the sense that the starting, de running duration and the stopping of the engine is in accordance with the functioning of the electrical machine and with the charging state of the battery.

A possible set-up of the present invention is represented in fig.2

The electrical machine can be an alternator (ref. 1) equipped with an adapted control unit (ref. 3 in Fig. 1), commonly called the regulator, in order to control the current and voltage components of the charging characteristic.

The voltage delivered by the alternator can have a magnitude of 12 V, and the DC delivered by the alternator can reach a magnitude of 100 Amps during some time period. The control unit (ref. 3 in Fig. 1), generally matched with the alternator and in this manner forming a functional unit with it, controls in time the course of this voltage and current, and to do this uses parameters such as among others the charging voltage and a built-in and adjustable clock.

The combustion engine can be a diesel engine (ref. 2) running at a pre-set speed and fuelled by an attached or non-attached fuel reservoir (not represented in the diagram). The engine (ref. 2) is mechanically linked to the alternator (ref. 1) and drives the said alternator. The controls for the said engine are limited to the signals necessary for starting and stopping the engine, said signals being generated by the measuring and control unit (ref. 4) which in the present invention has been realised by means of a PLC. Said measuring and control unit uses among others the voltage at the battery and the charging current to the battery as input signals, and in addition assumes a number of monitoring functions such as the emergency stop, the temperature and oil pressure of the engine. The logic in the said PLC also takes in account the choice to be made by the user between a manual and an automatic operation of the arrangement.

Both control units (ref. 3 and ref. 4) are housed together in an instrument panel box (ref. 5). The entire arrangement, consisting of the instrument panel box (ref. 5), the engine (ref. 2) and the alternator (ref. 1) is mounted in an assembly surrounded by casing (ref. 7) equipped with dismountable sound-proofed panels (not represented in the diagram). The battery (ref. B), which does not form part of the arrangement, must be connected externally by means of an electrical cable (ref. 6) which does form part of the arrangement.

The functioning of the charging device can be explained as follows:

Providing the fully automatic operation has been chosen, the charging device will put itself into operation when a voltage below a predetermined value, for instance 11.8 V, is detected at the battery. Mention is made of the fact that the device will not put itself into operation if no battery has been connected, as the necessary current for the cranking motor of the engine is delivered by the remaining power in the battery to be charged.

The thus started engine drives the alternator which delivers the current for charging the battery. When in completing the charging cycle which has been adopted by the control of the alternator a charging current below a predetermined value, for instance 10 Amps, is detected, the engine is automatically stopped.

If a manual operation of the device has been chosen, the engine must be started and stopped manually, in this case by using the appropriate start or stop button. If the engine has been started in manual operation mode, the automatic operation mode as described above will be engaged and continued, but the engine will not stop automatically, unless a built-in and operational reliability oriented monitoring function, for instance low oil pressure, gives the command hereto. A fuel shortage will stop the engine further to none.

All elements used in this invention are commercially available in the market and specific to this invention is the combination formed by said elements, the choice and valuation of the entities to be measured, and the logical processing of said entities into control signals for the operation process.

The presented invention is not restricted to the presently described and depicted disclosure, but can be realised in several other executions without departing from the scope of the claims.

## Claims

1. Charging device for traction batteries embodied in a portable, integrated and autonomously operating unit whereby, given the use of a combustion engine for delivering the power needed for an electrical machine which delivers a charging voltage and current following a predetermined characteristic for the charging of the said batteries, and given the possibility of operating said unit by choice in manual or automatic mode the automatic mode has been chosen resulting in a fully automatic operation mode under which condition this and following claims must be understood, the stopping of said engine under normal working conditions is determined by the value of the charging current delivered to the said battery.

2. Charging device for traction batteries as set forth in claim 1 wherein the signals required for the automatically starting and stopping of the engine are generated by a programmable logical measuring and control unit, in this sense that based upon a free programmable predetermined logic measured working parameters are combined and transformed into said signals.

3. Charging device for traction batteries as set forth in claim 2 wherein said device can operate normally under working conditions in this sense that the charging of the battery can continue in the intended way even when a user applies a varying work load to the battery.
